# EUROPÄISCHE PATENTSCHRIFT

(11) **EP 3 568 278 B1**
(45) Veröffentlichungstag und Bekanntmachung des Hinweises auf die Patenterteilung: **27.01.2021**
(21) Anmeldenummer: 18700477.5
(22) Anmeldetag: 10.01.2018
(51) Int. Cl.: B29C 45/76, B29C 45/84

(54) **VERFAHREN ZUR SIGNALVERARBEITUNG FÜR EINE SPRITZGIESSMASCHINE**
METHOD FOR PROCESSING SIGNALS FOR AN INJECTION MOLDING MACHINE
PROCÉDÉ POUR LE TRAITEMENT DES SIGNAUX POUR UNE MACHINE DE MOULAGE PAR INJECTION

(30) Priorität: 12.01.2017 DE 102017200394
(43) Veröffentlichungstag der Anmeldung: 20.11.2019
(73) Patentinhaber: Arburg GmbH + Co KG, 72290 Loßburg (DE)
(72) Erfinder: DUFFNER, Eberhardt, 72181 Starzach (DE); FAULHABER, Werner, 72290 Loßburg Wittendorf (DE)
(74) Vertreter: RPK Patentanwälte Reinhardt, Pohlmann und Kaufmann Partnerschaft mbB
(86) Internationale Anmeldenummer: PCT/EP2018/050570
(87) Internationale Veröffentlichungsnummer: WO 2018/130575

(56) Entgegenhaltungen:
- EP-A1- 1 378 806
- EP-A2- 1 297 941
- US-A1- 2003 062 643
- US-A1- 2008 039 969
- US-A1- 2010 109 182
- US-A1- 2013 033 220

## Beschreibung

### Bezug zu verwandten Anmeldungen

Die vorliegende Anmeldung bezieht sich auf und beansprucht die Priorität der deutschen Patentanmeldung 10 2017 200 394.4, hinterlegt am 12.01.2017, deren Offenbarungsgehalt hiermit ausdrücklich auch in seiner Gesamtheit zum Gegenstand der vorliegenden Anmeldung gemacht wird.

### Gebiet der Erfindung

Die Erfindung betrifft ein Verfahren zur Signalverarbeitung für eine Spritzgießmaschine zur Verarbeitung von Kunststoffen und anderer plastifizierbarer Materialien nach dem Oberbegriff des Anspruches 1.

### Stand der Technik

An bekannten Spritzgießmaschinen zur Verarbeitung von Kunststoffen und anderen plastifizierbaren Massen erfolgt bei einem Spritzzyklus zur Herstellung von Spritzteilen üblicherweise folgender Ablauf. Während eines Spritzzyklus wird die Formschließeinheit geschlossen und plastifiziertes Material über eine Plastifiziereinheit in das Spritzgießwerkzeug bzw. Formwerkzeug eingespritzt. Nach kurzer Zeit wird die Formschließeinheit wieder geöffnet und das erkaltete Spritzgussteil bzw. Formteil kann entnommen werden. Während des Betriebs führt eine Spritzgießmaschine viele solcher Zyklen aus. Häufig wird beim Spritzgießen am Zyklusende das gespritzte Formteil bei geöffnetem Formwerkzeug automatisch entnommen. Danach fährt die Formschließeinheit zur Vorbereitung des nächsten Zyklus wieder zu und der nächste Spritzvorgang bzw. Schuss kann vorgenommen werden.

Jedoch kann es beim Schließvorgang eines Formwerkzeugs einer Spritzgießmaschine Probleme beim Schließen des Formwerkzeugs oder bei der Entnahme des Formteils geben. Trotz größter Sorgfalt kann nie ausgeschlossen werden, dass sich ein Formteil nach dem Ausformen im Formwerkzeug befindet und nicht richtig entformt wurde oder dass ein sonstiger Fremdkörper den Spritzgießvorgang behindert, und es so beim nächsten Spritzgießzyklus zu Problemen kommt. Durch das Einklemmen eines Formteils oder eines sonstigen Fremdkörpers kann es beispielsweise zu einem ungewöhnlichen Kraftverlauf kommen, wodurch die Qualität der weiteren Formteile beeinträchtigt werden kann und im schlimmsten Fall die Spritzgießmaschine oder Teile der Spritzgießmaschine oder das Formwerkzeug beschädigt werden können. Im Stand der Technik sind mehrere Verfahren zur Erkennung solcher "schlechtartiger" Vorgänge bekannt.

Bekannte Verfahren zur Erkennung solcher Vorgänge basieren in der Regel z.B. auf der Beobachtung des Kraftverlaufes über der Zeit und/oder der Festlegung einer tolerierbaren Maximalkraft auf einer zuvor festgelegten Wegstrecke Δs. Zu diesem Zweck muss normalerweise der Istzustand des Kraftverlaufes oder der Kraft in der zuvor festgelegten Wegstrecke Δs erfasst und als Vergleichsgröße herangezogen werden. Ab einer bestimmten Wegmarke wird der Kraftverlauf hinsichtlich Abweichung vom Standard bzw. Sollzustand bewertet. Dies kann anhand verschiedener Bewertungskriterien geschehen. Im einfachsten Fall wir eine betragsmäßige Überschreitung einer Kraftschwelle oder eine Abweichung vom Sollkraftverlauf detektiert.

Weitere Verfahren reduzieren die freigegebene Fahrkraft auf einen geringen Betrag/Offset oberhalb der benötigten Zufahrkraft. Wird ein Spritzgießbauteil im Formwerkzeug eingeklemmt, so wird die Wegmarke "Formwerkzeug geschlossen" nicht erreicht und über eine Zeitüberwachung wird der Fehlerfall erkannt.

Ein weiteres Verfahren bewertet die Fahrbewegung im "Gut"-Fall. Das Kraftprofil über die Zeit wird erfasst. Über dieses Kraftprofil wird eine Hüllkurve gelegt. Wird nun im zyklischen Betrieb eine Grenze der Hüllkurve verletzt, so wird dies als Fehler gewertet und entsprechende Maßnahmen werden eingeleitet.

Alternativ zur Kraft kann eine andere physikalische Größe, die dieser Kraft zugeordnet werden kann, erfasst werden. Dies kann zum Beispiel der Motorstrom des Antriebsmotors für die Fahrbewegung sein.

Diese Verfahren können beliebig miteinander kombiniert werden. Auch der Anbauort der Sensorik kann variieren. Es können auch Sensoren mit zwei oder mehr deutlich unterschiedlichen Messbereichen verwendet werden (Schließkraftbereich / Werkzeugsicherungs-Kraftbereich), um im Werkzeugsicherungsbereich eine bessere Signalqualität zu erreichen.

Aus der dem Oberbegriff des Anspruches 1 zu Grunde liegenden US 2010/109182 A1 ist ein Verfahren zur Einstellung der Formschließkraft an einer zyklisch arbeitenden Spritzgießmaschine bekannt. Mittels eines Sensors wird die Formschließkraft in einem Spritzgießprozess detektiert und auf eine Variation des Einspritzdrucks überwacht. Überschreitet die Formschließkraft einen vorbestimmten Grenzwert, wird dadurch eine geeignete Formschließkraft eingestellt. Zu diesem Zweck wird die Druckkurve analysiert und differenziert.

Aus der EP 1 378 806 A1 ist eine elektrische Spritzgießmaschine mit einem Servomotor bekannt, der durch eine Druckregelschleife den Einspritzdruck regelt. Das ermittelte Signal wird mathematisch verarbeitet, analysiert und bandgefiltert, um den Einspritzdruck zu regeln.

Vergleichbare Lösungen zur Auswertung und Verarbeitung von Sensorsignalen, um dadurch Steuersignale für die Maschine zu gewinnen, sind aus der US 2003/062643 A1, der EP 1 297 941 A2, der US 2008/039969 A1 und der US 2013/033220 A1 bekannt.

In der EP 1 121 627 B1 ist ein Verfahren zur Regelung einer Antriebseinheit an einer Spritzgießmaschine offenbart. Ein Gebersystem erstellt Istwertverläufe des Antriebsmotors und eine Reglereinheit vergleicht Sollwertverläufe mit den Istwertverläufen und erzeugt daraus Stellsignale zur Regelung des Antriebsmotors. Vor Ort befindlichen Steuerungen der Antriebseinheiten, welche miteinander kommunizieren, werden Sollwertverläufe und bedarfsweise die zugehörigen Toleranzen vorgegeben, so dass vor Ort eine Regelung der Antriebseinheiten möglich ist. Die vor Ort befindlichen Steuerungen geben erst dann der Maschinensteuerung eine Rückmeldung, wenn Abweichungen von den Sollwertverläufen auftreten, die von den Steuerungen vor Ort zusammen nicht mehr allein beherrschbar sind.

In der DE 199 25 302 A1 ist ein Verfahren zum sicheren Schließen einer Schließeinheit einer Maschine für die Verarbeitung von spritzgießfähigem Material insbesondere einer Kunststoffspritzgießmaschine offenbart. Vor dem Start des Produktionsbetriebes der Spritzgießmaschine wird der erforderliche Strombedarf des Servomotors in Abhängigkeit des Verschiebewegs des beweglichen Formträgers gemessen und abgespeichert. Während des anschließenden Produktionsbetriebes bzw. während eines Spritzgießzyklus der Spritzgießmaschine wird der benötigte Strombedarf für das Bewegen des beweglichen Formträgers von der offenen Werkzeugposition bis zur geschlossenen Werkzeugposition überwacht und aufgezeichnet. Ist der Strombedarf an einer Stelle des Verschiebewegs höher als der abgespeicherte Strombedarf plus eines eventuellen Offsetwertes bzw. einer vorher definierten Toleranzgrenze, wird die Bewegung des beweglichen Formträgers unterbrochen und somit der Spritzgießzyklus unterbrochen.

Ein Verfahren zum Betreiben einer Spritzgießmaschine ist in der DE 10 2004 050 445 A1 offenbart. Dort wird in einer Sollgrößenermittlungsphase zunächst ein Sollgrößenverlauf entlang zumindest eines Abschnittes eines Werkzeugfahrweges ermittelt. Ein Vorgabeverlauf zumindest einer Ausgangsgröße wird vorgegeben und während einer Messfahrt zumindest ein resultierender Wert der Sollgröße gemessen und gespeichert. Aus den gemessenen Werten der Sollgröße wird ein Sollgrößenverlauf entlang des Werkzeugverfahrenswegabschnittes gebildet. Im Folgenden wird die Spritzgießmaschine gemäß dem ermittelten Sollgrößenverlauf in der Betriebsphase betrieben.

In der DE 600 16 101 T2 ist eine Formschutzvorrichtung für eine Spritzgießmaschine innerhalb eines Formschutzbereiches offenbart. Eine Störungsabschätzungsüberwachungseinrichtung schätzt ein Störungsdrehmoment ab, wobei eine Steuereinrichtung den oberen Grenzwert des Störungsdrehmoments in jedem Formschließprozess auf der Grundlage eines mittleren Werts von Störungsdrehmomenten, die durch die Störungsabschätzungsüberwachungseinrichtung in einer Vielzahl von vorhergehenden Formschließprozessen abgeschätzt wird, definiert. Wird eine obere Grenze in dem Formschutzbereich überschritten wird ein Anomalsignal ausgegeben.

Ein Verfahren zum sicheren Schließen eines Spritzgießwerkzeugs ist in der DE 10 2007 043 673 A1 offenbart. Während eines Schließvorgangs wird ab einer vorgegeben Wegmarke die Fahrkraft oder die Stromaufnahme des Schließantriebs dadurch begrenzt, dass ein direkt oder indirekt von dem Geschwindigkeitsverlauf der Schließbewegung abhängiger Funktionsverlauf definiert wird, und eine Abschaltung des Schließantriebs veranlasst wird, wenn der gemessene Funktionsverlauf den vorgegebenen Funktionsverlauf unter Berücksichtigung eines Toleranzbandes verlässt.

All diesen Erfindungen ist gemeinsam, dass werkzeugspezifische Sollzustandsbedingungen benötigt werden und diese mit gemessenen Istzuständen verglichen werden, worauf im Anschluss bei einem Betrieb außerhalb eines Sollzustandes ein Eingriff in die Maschinensteuerung bzw. den Spritzgießzyklus erfolgt. Wird jedoch ein Parameter wie zum Beispiel die Geschwindigkeit, die Kraft, der Strombedarf der Schließbewegung oder das komplette Formwerkzeug ausgetauscht oder variiert, so müssen der Sollwertverlauf und somit die Bedingungen für einen Sollzustand und somit für einen fehlerfreien Zyklus neu erfasst werden. Weitere Parametervariationen sind beispielsweise sich ändernde Reibungsverhältnisse in der Werkzeugführung oder Temperaturausdehnungen.

### Aufgabe der Erfindung

Ausgehend von diesem Stand der Technik liegt der vorliegenden Erfindung die Aufgabe zugrunde, eine verlässliche, einfache und unabhängige Signalverarbeitung für eine Sicherung des Spritzgießprozesses zu gewährleisten.

Dies wird mit einem Verfahren zur Signalverarbeitung gemäß den Merkmalen des Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

### Darstellung der Erfindung

Das Verfahren zur Signalverarbeitung an einer in Zyklen arbeitenden Spritzgießmaschine zur Verarbeitung von Kunststoffen und anderer plastifizierbarer Materialien basiert auf der Erfahrung, dass viele unerwünschte Spritzgießprozesse z.B. im Kraftverlauf einen Ruck bzw. einen Stoß aufweisen, welcher sich in der entsprechenden zeitlichen Änderung der Kraft dF/dt kennzeichnet. Die zeitliche Änderung der Kraft ist wiederum nach dem zweiten Gesetz von Newton, Kraft gleich Masse mal Beschleunigung, mit der zeitlichen Änderung der Beschleunigung da/dt verknüpft.

Das Verfahren erfasst wenigstens eine Messgröße mit wenigstens einem Sensor an einer Spritzgießmaschine mit wenigstens einer Maschinensteuerung. In wenigstens einer Verarbeitungseinheit mit wenigstens einer Schnittstelle wird die Messgröße verarbeitet. Die Verarbeitungseinheit verarbeitet die Messgröße in wenigstens einem Abschnitt wenigstens eines Zyklus mit wenigstens einer mathematischen Funktion und wertet wenigstens ein daraus resultierendes Ergebnis im Rahmen wenigstens einer Analyse aus, wobei die Analyse der Verarbeitungseinheit vor Ort im oder in der Nähe des Sensors in der Verarbeitungseinheit erfolgt, wodurch sich eine verlässliche, einfache und unabhängige Signalverarbeitung zur Sicherung des Spritzgießprozesses ergibt. Gleichzeitig wird eine proaktive Detektion potentiell kritischer Kräfte oder Beschleunigungen durch Auswertung ihres Differentials ermöglicht.

Eine mathematische Funktion in diesem Zusammenhang umfasst beliebige Rechenvorschriften aus allen Gebieten der Mathematik, beispielsweise mathematische Funktionen, mathematische Operationen, Filter und Transformationen.

Für eine gezielte Sicherung des Spritzgießprozesses umfasst die Analyse wenigstens eine Soll-/Ist-Analyse, wobei die Verarbeitungseinheit bei einer Abweichung eines Istzustandes von einem Sollzustand wenigstens ein Signal an die Maschinensteuerung und/oder an einen Aktor der Spritgießmaschine sendet. Ein Aktor in diesem Zusammenhang umfasst eine beliebige Komponente der Spritzgießmaschine, beispielsweise einen Antrieb, eine Achse und/oder eine Steuerung.

Für eine schnelle Übertragung von Daten des Spritzgießprozesses ist die Schnittstelle als eine digitale Echtzeitanbindung ausgeführt.

Um digitales Rauschen zu minimieren und einen fehlerhaften Spritzgießprozesses zu erkennen und in den Prozess einzugreifen, bevor eine Schädigung des Systems geschieht, ist eine schnelle Datenerfassung, ein schneller Datenaustausch sowie eine schnelle Analyse erforderlich, wobei die Schnittstelle taktsynchron mit wenigstens einem Takt eines Bustaktes der Maschinensteuerung arbeitet und/oder die Verarbeitungseinheit die Analysen in wenigstens einem Takt des Bustaktes durchführt. Die Taktsynchronität ist von großem Nutzen, wenn in verschiedenen Systemen digitalisiert wird, da durch die Kenntnis der Synchronität der verschiedenen Untersysteme ohne Oversampling eine sehr gute Signalerfassung erreichbar ist. Die Taktsynchronität wirkt quasi von selbst wie ein digitaler Filter für den Takt-Jitter, der ansonsten die Signale zur übergeordneten Steuerung sehr breitbandig verrauscht. Insbesondere wenn mathematische Operationen wie Differenzieren oder Fourier-Transformation verteilt in den Subsystemen angewandt werden sollen, wäre ohne Taktsynchronität eine mindestens 10- bis 50-fach schnellere Abtast- oder Samplingrate erforderlich, d.h. die Auswerteeinheiten vor Ort müssten erheblich schneller sein.

Vorteilhaft für eine umfangreiche sowie detaillierte Analyse erhält die Verarbeitungseinheit von der Maschinensteuerung Daten zur Auswertung des Ergebnisses der Messgrößen bei der Analyse.

Darüber hinaus ist es für schnelle Ergebnisse der Analyse von Vorteil, dass auch die Maschinensteuerung wenigstens einen Teil der Analyse durchführt.

Um dabei ergänzend eine vorteilhaft einfache Signalerfassung und -verarbeitung zu erreichen, umfasst die Messgröße wenigstens eine Kraft und/oder wenigstens eine Beschleunigung und die mathematische Funktion wenigstens eine zeitliche Ableitung.

Insbesondere wird vorzugsweise das resultierende Ergebnis durch Vergleich mit dem Sollverlauf eines Kraft- und/oder Beschleunigungsdifferentials bewertet, z.B. durch die Festlegung eines zulässigen Differentials dF/dt auf einer definierten Wegstrecke Δs, um abschnittsweise Eingriffskriterien zu definieren, die unabhängig vom jeweiligen Formwerkzeug verwendbar sind.

Weiterhin ist vorzugsweise für eine einfache und verlässliche Signalverarbeitung die wenigstens eine Kraft eine Kraft an Teilen einer Schließeinheit, vorzugsweise einer Formschließeinheit oder dass die wenigstens eine Beschleunigung eine Beschleunigung von Teilen einer Schließeinheit, vorzugsweise einer Formschließeinheit ist.

Für eine einfache Signalerfassung und -verarbeitung umfasst die Messgröße weiter vorteilhafterweise wenigstens eine Drehzahl und/oder wenigstens ein Drehmoment und ist die mathematische Funktion wenigstens eine Fourier-Transformation.

Vorzugsweise ist für eine einfache und verlässliche Signalverarbeitung die wenigstens eine Drehzahl und/oder das wenigstens eine Drehmoment eine Drehzahl und/oder ein Drehmoment einer Antriebseinheit, vorzugsweise eines Rotationsantriebs.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvollerer Weise miteinander kombinierbar und können durch Erläutern der Sachverhalte aus der Beschreibung und durch Details aus den Figuren ergänzt werden, wobei weitere Ausführungsvarianten der Erfindung aufgezeigt werden.

### Kurzbeschreibung der Figuren

Im Folgenden wird die Erfindung anhand eines in den beigefügten Figuren dargestellten Ausführungsbeispiels näher erläutert. Es zeigen:
- Fig. 1: eine Seitenansicht einer schematischen Spritzgießmaschine zur Ausführung des erfindungsgemäßen Verfahrens,
- Fig. 2a: einen Verlauf einer Messgröße in Abhängigkeit von der Zeit,
- Fig. 2b: einen Verlauf der Ableitung der Messgröße gemäß Fig. 2a nach der Zeit,
- Fig. 2c: den Verlauf aus Figur 2b mittels eines Hochpassfilters gefiltert,
- Fig. 2d: eine Fourier-Transformation des Verlaufs aus Figur 2c,
- Fig. 3: ein Flussdiagramm des erfindungsgemäßen Verfahrens.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

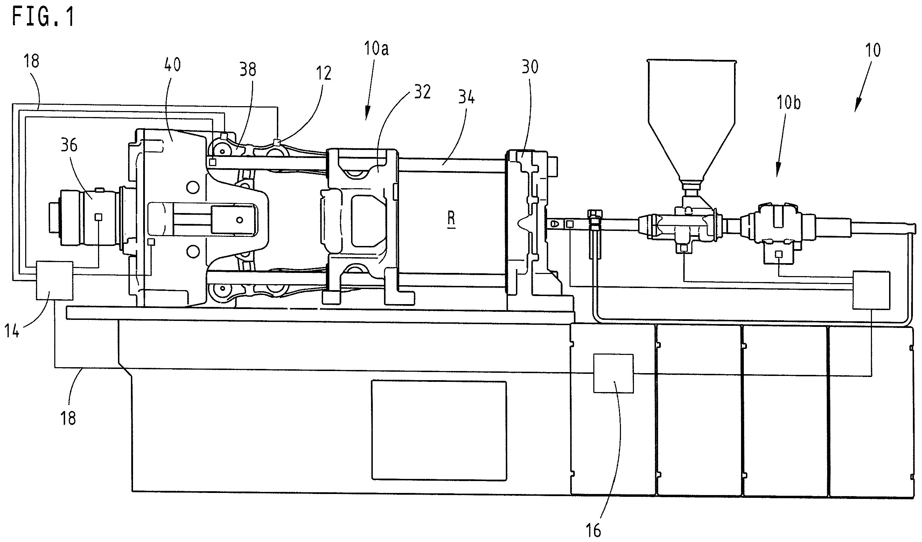

Fig. 1 zeigt eine schematische Ansicht einer Spritzgießmaschine 10 zur Verarbeitung von Kunststoffen und anderer plastifizierbarer Materialien mit einer Formschließeinheit 10a und einer Plastifiziereinheit 10b. Die Formschließeinheit 10a weist einen ersten, vorzugsweise stationären Formträger 30 und einen zweiten, vorzugsweise beweglichen Formträger 32 auf, welcher mit dem stationären Formträger 30 über Holme 34 verbunden ist. Zwischen dem stationären Formträger 30 und dem beweglichen Formträger 32 ist ein Formspannraum R zur Aufnahme verschiedener Formwerkzeuge gebildet. Ein Antrieb 36, beispielsweise ein Rotationsantrieb, betätigt einen Mechanismus 38 zum Öffnen und Schließen der Spritzgießform, z.B. einen Kniehebelmechanismus, welcher sich an einer Abstützplatte 40 abstützt und den zweiten beweglichen Formträger 32 bewegt. Für einen Spritzgießzyklus wird der zweite bewegliche Formträger 32 in Richtung des ersten stationären Formträger 30 bewegt und schließt dadurch ein Formwerkzeug, deren Werkzeughälften sich im Formspannraum R befinden und auf die Formträger gespannt sind. Im Anschluss wird das Spritzgießmaterial von der Plastifiziereinheit 10b in einen Formhohlraum des Formwerkzeugs eingespritzt. Nach einem Spritzgießvorgang wird das Formwerkzeug geöffnet und das Formteil aus dem Formspannraum R entformt, beispielsweise mit Hilfe einer nicht eingezeichneten Auswerfervorrichtung. Danach beginnt ein neuer Spritzgießzyklus.

Die Spritzgießmaschine 10 weist wenigstens eine Maschinensteuerung 16, wenigstens eine Verarbeitungseinheit 14 mit wenigstens einer Schnittstelle 18, welche wenigstens eine Messgröße 20 verarbeitet, und wenigstens einen Sensor 12 auf, welcher die wenigstens eine Messgröße 20 erfasst. In einem bevorzugten Ausführungsbeispiel gemäß Fig. 1 weist die Spritzgießmaschine 10 acht Sensoren 12 auf, welche an unterschiedlichen Positionen, z.B. an einem Holm 34, einem Kniehebelmechanismus und/oder am Antrieb 36, der Spritzgießmaschine 10 angebracht sind. Möglich ist beispielsweise auch jede andere beliebige Positionierung von Sensoren 12, beispielsweise auf der Seite der Formschließeinheit 10a und/oder auf der Seite der Plastifiziereinheit 10b. Prinzipiell ist aber auch eine beliebige Anzahl an Sensoren 12 denkbar. Es ist weiterhin möglich, dass auch mehrere Sensoren 12 an geeigneten Messstellen platziert werden und die gleiche Messgröße 20 erfassen. Mit einer solchen Erhöhung der Anzahl der Sensoren 12 und einer damit einhergehenden schnellen Reaktionszeit aufgrund einer kürzeren Laufzeit des Messsignals, erhöht sich vorteilhaft die Auflösung des Signals und die Signalqualität der Messgröße 20. Auch denkbar ist, dass ein Sensor 12 mehrere Messgrößen 20, wie zum Beispiel Kraft und Beschleunigung beispielsweise in Abhängigkeit von der Zeit und/oder der Position erfasst.

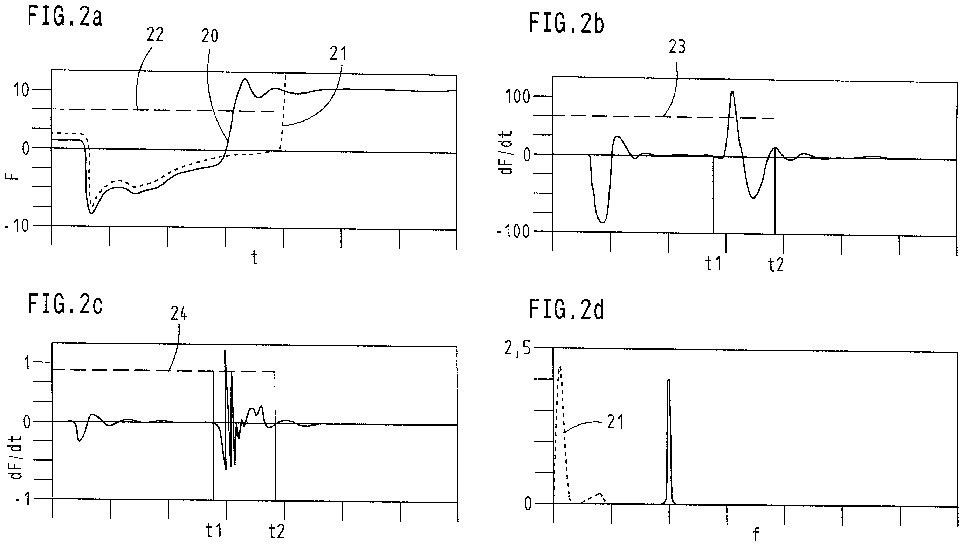

In Fig. 2a ist ein Verlauf einer Messgröße 20, beispielsweise der Kraft F über die Zeit t dargestellt. Es handelt sich im Ausführungsbeispiel um den für die Auswertung interessanten Bereich beim Zufahren eines Formwerkzeugs kurz vor Formschluss der Teile des Formwerkzeugs. In Fig. 2a von links kommend wird das Formwerkzeug mit einer positiven Kraft bewegt und dann abgebremst, was zu einer negativen Kraft führt, die dann beim Formschluss wieder ansteigt. Der gestrichelte Verlauf 21 zeigt einen "Gutfall" mit normalem Kraftaufbau, der über das Diagramm hinausgeht. Die horizontale Linie 22 zeigt eine Überwachungsgrenze, bei deren Überschreiten z.B. die Formwerkzeugsicherungskraft beim Schließen der Formschließeinheit überschritten ist, was zu einer Fehlermeldung führt. Die erfasste Messgröße 20 wird von der Verarbeitungseinheit 14 in wenigstens einem Abschnitt wenigstens eines Zyklus mit wenigstens einer mathematischen Funktion verarbeitet. Dieser Abschnitt wird in Fig. 2b durch das Überwachungsfenster zwischen den Zeitpunkten t₁ und t₂ gebildet. Die wenigstens eine mathematische Funktion ist beispielsweise eine zeitliche Ableitung gemäß Fig. 2b oder eine Fourier Transformation gemäß Fig. 2d. Wenigstens ein resultierendes Ergebnis wird im Rahmen wenigstens einer Analyse ausgewertet, wobei die Analyse der Verarbeitungseinheit 14 vor Ort im oder in der Nähe des Sensors 12 in der Verarbeitungseinheit 14 erfolgt. Prinzipiell denkbar ist, dass die Verarbeitungseinheit 14 beispielsweise an den Sensor 12 angrenzt, ein Teil dessen oder in diesen integriert ist.

In Fig. 2b ist die Messgröße 20 eine Kraft und die mathematische Funktion eine zeitliche Ableitung. Dargestellt ist in Fig. 2b die zeitliche Ableitung der Kraft dF/dt, aufgetragen über der Zeit t. Denkbar sind beliebige Verläufe von Messgrößen 20, z.B. die zeitliche Ableitung der Kraft dF/dt und/oder der Beschleunigung da/dt, aufgetragen über der Zeit t oder dem Weg s, dem beispielsweise die Formschließeinheit bei der Schließbewegung zurücklegt. Weiterhin sind aber auch andere Messgrößen 20, z.B. ein Drehmoment, und mathematische Funktionen möglich, beispielsweise eine Fourier-Transformation, Spektrogramme oder vergleichbare Verfahren.

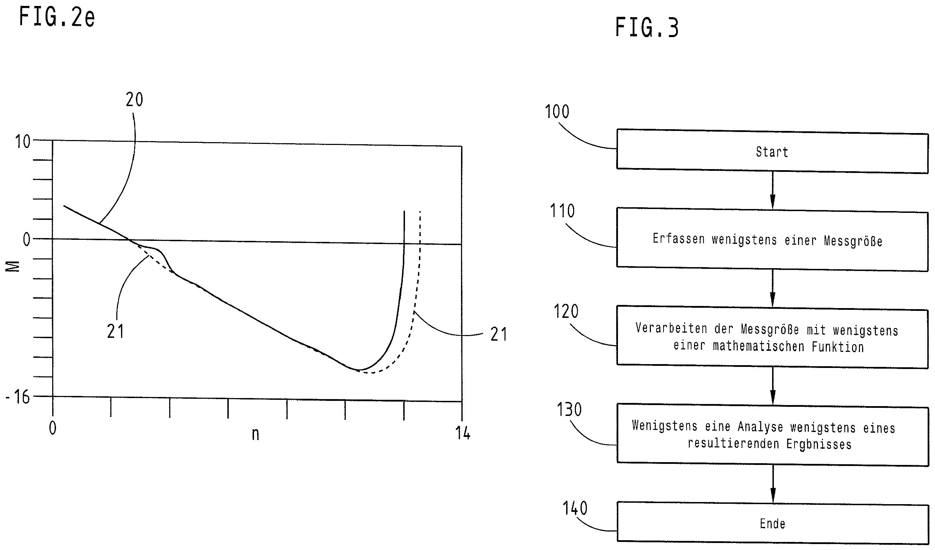

In Fig. 3 ist zusammenfassend das erfindungsgemäße Verfahren in einem Flussdiagramm mit Startschritt 100 und Endschritt 140 dargestellt. Nach dem Startschritt 100 wird in einem ersten Schritt 110 wenigstens eine Messgröße 20 erfasst. Danach wird die wenigstens eine Messgröße 20 in einem zweiten Schritt 120 mit wenigstens einer mathematischen Funktion verarbeitet. In einem dritten Schritt 130 wird wenigstens ein resultierendes Ergebnis im Rahmen wenigstens einer Analyse ausgewertet, bevor das Verfahren im Schritt 140 endet, um dann z.B. im nächsten Zyklus wieder neu zu starten. In einem bevorzugten Ausführungsbeispiel umfasst die Analyse wenigstens eine Soll-/Ist-Analyse, wobei die Verarbeitungseinheit 14 bei einer Abweichung eines Istzustandes von einem Sollzustand wenigstens ein Signal an die Maschinensteuerung 16 und/oder an einen Aktor der Spritzgießmaschine 10, beispielsweise an den Antrieb 36 sendet. Der Sollzustand kann beliebig definiert sein, beispielsweise kann der Sollzustand mehrere Messgrößen 20 umfassen, welche sich jeweils in einem bestimmten Bereich bewegen müssen und so den Sollzustand bilden. Prinzipiell denkbar ist aber beispielsweise auch die Definition eines Sollzustandes über eine zeitliche Ableitung oder eine Transformation einer und/oder mehrerer Messgrößen 20. Solch ein Bereich wird z.B. in den Fig. 2b und 2c durch die Überwachungsgrenzen 23, 24 und ein Überwachungsfenster zwischen den Zeitpunkten t₁ und t₂ gebildet. In ähnlicher Weise gilt dies auch für den Istzustand. Der Istzustand kann beispielsweise aus mehreren Messgrößen 20 gebildet sein, beispielsweise Kraft und Antriebsstrom, und/oder durch zeitliche Ableitungen und/oder Fourier-Transformationen von Messgrößen 20.

Verfahrensgemäß wird es so insbesondere möglich, kritische Stoßvorgänge durch Betrachtung der differenziellen Ableitungen und/oder geeigneter Frequenzbewertungen (Filterung) des Kraft- oder Beschleunigungsdifferentials, ggfs. ergänzt durch die Betrachtung des Signales im Frequenzbereich (FFT, Spektrogramm oder vergleichbare Verfahren) zu erkennen. Das Verfahren kann zudem durch das Abspeichern und Wiedererkennen charakteristischer Störungen im Zeit- und Frequenzbereich erweitert werden. Ist also ein einmal erkanntes Spektrum abgespeichert, kann bei dessen erneuten Auftreten schneller auf die Fehler- oder Störquelle geschlossen werden.

Kritische Messgrößenverläufe wie z.B. Ruck- und Stoßvorgänge lassen sich durch zusätzliche Kriterien bewerten. So kann z.B. ein Sollverlauf des Kraft- oder Beschleunigungsdifferentials, z.B. durch die Festlegung eines zulässigen Differentials dF/dt auf einer definierten Wegstrecke Δs vorgegeben werden, so dass bei einer Abweichung vom Sollverlauf ein Eingriffskriterium für die Verarbeitungseinheit 14 oder die Maschinensteuerung 16 definierbar ist.

Die Schnittstelle 18 ist in einem weiteren bevorzugten Ausführungsbeispiel als eine digitale Echtzeitanbindung, beispielsweise als Feldbusschnittstelle oder Ethernetschnittstelle ausgeführt.

Im Ausführungsbeispiel arbeitet die Schnittstelle 18 taktsynchron mit wenigstens einem Takt eines Bustakts der Maschinensteuerung 16 und/oder die Verarbeitungseinheit 14 führt die Analyse in wenigstens einem Takt des Bustakts durch. Beispielsweise lässt sich so eine schnelle Erfassung der Messgrößen 20 bewerkstelligen. Die Taktsynchronität ist von großem Nutzen, wenn in verschiedenen Systemen digitalisiert wird, da durch die Kenntnis der Synchronität der verschiedenen Untersysteme ohne Oversampling eine sehr gute Signalerfassung erreichbar ist. Die Taktsynchronität wirkt quasi von selbst wie ein digitaler Filter für den Takt-Jitter, den man sonst erhält und der die Signale zur übergeordneten Steuerung sehr breitbandig verrauscht. Insbesondere wenn mathematische Operationen wie Differenzieren oder Fourier-Transformation verteilt in den Subsystemen angewandt werden sollen, wäre ohne Taktsynchronität eine mindestens 10- bis 50-fach schnellere Abtast- oder Samplingrate erforderlich, d.h. die Auswerteeinheiten vor Ort müssten erheblich schneller sein. Durch die erfindungsgemäße taktsynchrone, vorzugsweise Varan-Ethernet-Verbindung kann daher die Umsetzung der Erfindung verbessert werden.

In einem weiteren bevorzugten Ausführungsbeispiel erhält die Verarbeitungseinheit 14 von der Maschinensteuerung 16 Daten zur Auswertung des Ergebnisses der Messgrößen bei der Analyse. Mit diesen Daten kann die Verarbeitungseinheit 14 auf in der Maschinensteuerung 16 vorliegenden Informationen zurückgreifen. Da die Informationen aber vor Ort in der Verarbeitungseinheit 14 vorliegen, ist eine schnellere Signalverarbeitung möglich.

Für ein schnelles Ergebnis der Analyse führt vorzugsweise nach Bedarf auch die Maschinensteuerung 16 wenigstens einen Teil der Analyse durch.

Im Ausführungsbeispiel gemäß Fig. 2b umfasst die Messgröße 20 wenigstens eine Kraft und/oder wenigstens eine Beschleunigung und die mathematische Funktion ist wenigstens eine zeitliche Ableitung. Dabei ist erkennbar, dass auch die zeitliche Ableitung im zwischen den Zeitpunkten t₁ und t₂ gebildeten Überwachungsfenster die Überwachungsgrenze 23 überschreitet, was zu einer Fehlermeldung führt.

Bevorzugt ist die wenigstens eine Kraft bzw. die wenigstens eine Beschleunigung eine Kraft bzw. Beschleunigung einer Schließeinheit, beispielsweise der Formschließeinheit 10a.

Fig. 2c zeigt die Kurve aus Fig. 2b nach Verarbeitung der Messgröße 20 mit einer weiteren mathematischen Funktion, beispielsweise eines Hochpassfilters. Durch die Filterung ergibt sich eine andere Skalierung, erkennbar ist jedoch auch, dass der Verlauf der erfassten, abgeleiteten und gefilterten Größe im zwischen den Zeitpunkten t₁ und t₂ gebildeten Überwachungsfenster die Überwachungsgrenze 24 überschreitet, was zu einer Fehlermeldung führt. Bereits durch die die Überwachungsgrenze 24 überschreitenden erste Flanke des Signals kann frühzeitig eine signifikante Abweichung erkannt werden. Denkbar ist aber auch die Anwendung einer beliebiger Anzahl mathematischer Funktionen auf die Messgröße 20, wie beispielsweise gemäß Fig. 2d, in der das Signal aus Fig. 2c Fourier transformiert wurde. Hier werden insbesondere Frequenzverlagerungen deutlich, die vom gestrichelt dargestellten Gutfall abweichen.

In einem weiteren bevorzugten Ausführungsbeispiel umfasst die Messgröße 20 wenigstens eine Drehzahl und/oder wenigstens ein Drehmoment und die mathematische Funktion ist wenigstens eine Fourier-Transformation.

Bevorzugt ist die wenigstens eine Drehzahl und/oder das wenigstens eine Drehmoment eine Drehzahl und/oder ein Drehmoment eines Antriebs 36, vorzugsweise eines Rotationsantriebs. Eine derartige Fourier-Transformation ist in Fig. 2e für das Drehmoment M über der Drehzahl n des Motors eines Antriebs dargestellt, wobei wiederum der Gutfall als Regelfall gestrichelt dargestellt ist. Bei einem bekannten Frequenzspektrum, wie es vom Antrieb im Regelfall erzeugt wird, lassen sich dadurch nicht nur vom Gutfall abweichende Fälle erkennen, es ist sogar möglich, genau und auch frühzeitig zu erkennen, was der Auslöser der Abweichung ist, z.B. welches Lager beschädigt ist und ausgetauscht werden muss.

Gibt es beim Schließvorgang eines mindestens zweiteiligen Formwerkzeuges einen ungewöhnlichen Kraftverlauf, so deutet dies meist auf einen unerwünschten Vorgang hin. Dies kann z.B. das Einklemmen eines Formteils oder eine sonstigen Fremdkörpers sein.

Das vorliegende Verfahren macht sich die Erfahrung zunutze, dass viele unerwünschte Verläufe von Messgrößen einen Ruck zeigen, welcher durch eine entsprechende zeitliche Änderungsrate gekennzeichnet ist, die durch Anwendung einer mathematischen Funktion auf den Verlauf erkennbar wird. So beinhalten unerwünschte Kraftverläufe einen Ruck bzw. Stoß, welcher durch eine entsprechende zeitliche Änderungsrate der Kraft dF/dt gekennzeichnet ist. Diese wiederum ist über das zweite Newtonsche Bewegungsgesetz mit der Änderungsrate der Beschleunigung da/dt verknüpft. Insoweit basiert das Verfahren auf der Ermittlung des zeitlichen Verlaufes des Kraft- oder Beschleunigungsdifferentials (dF/dt oder da/dt) der Bewegung und der Erkennung einer unzulässigen Abweichung dieser Größe(n) bezogen auf den betrachteten Prozess.

Wie im Stand der Technik ausgeführt, basieren bekannte Verfahren auf einer Beobachtung des Kraftverlaufs. Alle diese Verfahren haben gemeint, dass der Kraftverlauf stark vom gewählten Arbeitspunkt abhängt. Wird ein Parameter wie z.B. die Geschwindigkeit der Schließbewegung variiert, so muss der Vergleichswert für den "Gut"-Fall neu erfasst werden, eventuell müssen die Überwachungsgrenzen angepasst werden. Weitere Variationen im Prozess, wie sich ändernde Reibungsverhältnisse in der Werkzeugführung oder Temperaturausdehnungen führen ebenfalls dazu, dass die Bewertungskriterien angepasst werden müssen. Erfindungsgemäß sind genau diese Anpassungen nicht mehr notwendig bzw. es kann auf Erfahrungen und Referenzwerte zurückgegriffen werden. Durch die Differentiation der Kraft oder der Beschleunigung, gegebenenfalls noch ergänzt um eine geeignete Filterung, wird die Überwachung unabhängig vom Arbeitspunkt bzw. von Beeinflussungen durch Prozessparameter, die eine zulässige Änderung des Kraftverlaufes zur Folge haben. Offsets im Kraftverlauf werden eliminiert, durch geeignete Filterung wird die Auswertung auf den relevanten Bereich (Fehlerfall) reduziert.

Kombiniert man das Verfahren mit einer sehr schnellen Signalerfassung (Überabtastung), so kann in einer Verarbeitungseinheit 14 vor Ort nahe des oder im Sensor 12 als Signalaufbereiter unabhängig von der Steuerung und auch vom Spritzgießzyklus selbst, der Fehlerfall bewertet und erkannt werden. Die Verarbeitungseinheit 14 kann der Maschinensteuerung 16 den Fehlerfall z.B. als digitales Signal anzeigen. Ergänzend kann die Verbindung Verarbeitungseinheit 14 zur Maschinensteuerung 16 analog oder als Feldbusschnittstelle bzw. (Echtzeit-)Ethernetschnittstelle ausgeführt sein. Ist diese Schnittstelle zwischen Verarbeitungseinheit 14 und Maschinensteuerung 16 geeignet schnell, können Teile der Bewertung oder das gesamte Verfahren auch auf der Maschinensteuerung 16 ausgeführt werden.

Der Ruck bzw. Stoß entsteht am Ort z.B. eines eingeklemmten Spritzgießteils, vorzugsweise bevor dieses in den plastischen Bereich verformt wird. Der Ruck oder Stoß läuft nun als mechanische Welle, z.B. als Longitudinalwelle, vom Ort der Erzeugung zum Sensor. Diese Reaktionszeit des Systems kann reduziert werden, indem man zur Auswertung mehr als einen Sensor an geeigneten Messstellen platziert, so dass die jeweils kürzeste Laufzeit ausgewertet werden kann. Gleichzeitig erhöht sich, mit der Anzahl der Sensoren, die Auflösung des Kraftsignals und damit die Signalqualität.

Die Messung der Messgröße 20 wie z.B. Kraft oder Beschleunigung kann z.B. in oder an einer Säule oder in oder an einem Holm 34 des Kraftrahmens der Formschließeinheit 10a oder um die Signalauflösung und/oder Signalgüte zu verbessern an einer zweiten gegenüberliegenden oder diagonalen Säule erfolgen. Gegebenenfalls können auch Messungen im Maximalfall in oder an allen Säulen oder Holmen 34 erfolgen.

Eine Messung der Messgröße 20 kann auch an Elementen erfolgen, in die die Kraft eingeleitet oder durch die die Kraft durchgeleitet wird, wie z.B. der stationäre Formträger 30 oder bewegliche Formträger 32, die hintere Abstützplatte 40, an Kniehebelbauelementen, Antriebsplatten, Spindeln, Motorabtrieb oder vergleichbaren geeigneten Elementen.

Das beschriebene Verfahren erlaubt damit die Überwachung der zulässigen Werkzeugbelastung unabhängig von Parametern wie Maschinengröße, Schließgeschwindigkeiten, Reibung, Temperatureinflüssen, usw. und unabhängig von Bauart und Antriebstechnologie der Schließeinheit.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 10: Spritzgießmaschine
- 10a: Formschließeinheit
- 10b: Plastifiziereinheit
- 12: Sensor
- 14: Verarbeitungseinheit
- 16: Maschinensteuerung
- 18: Schnittstelle
- 20: Messgröße
- 21: Messgröße Gutfall
- 22, 23, 24: Überwachungsgrenze
- 30: stationärer Formträger
- 32: beweglicher Formträger
- 34: Holm
- 36: Antrieb
- 38: Mechanismus
- 40: Abstützplatte
- 100: Startschritt
- 110: erster Schritt
- 120: zweiter Schritt
- 130: dritter Schritt
- 140: Endschritt
- F: Kraft
- M: Moment
- N: Drehzahl
- R: Formspannraum
- t: Zeit
- t₁, t₂: Zeitpunkte

## Patentansprüche

1. Verfahren zur Signalverarbeitung an einer in Zyklen arbeitenden Spritzgießmaschine (10) zur Verarbeitung von Kunststoffen und anderer plastifizierbarer Materialien mit
- wenigstens einer Maschinensteuerung (16),
- wenigstens einem Sensor (12), welcher wenigstens eine Messgröße (20) erfasst,
- wenigstens einer Verarbeitungseinheit (14), welche die wenigstens eine Messgröße (20) vor Ort im oder am Sensor (12) in der Verarbeitungseinheit (14) verarbeitet und mit wenigstens einer als digitale Echtzeitanbindung ausgeführten Schnittstelle (18) mit der Maschinensteuerung verbunden ist,
- wobei die Verarbeitungseinheit (14) die wenigstens eine Messgröße (20) in wenigstens einem Abschnitt wenigstens eines Zyklus mit wenigstens einer mathematischen Funktion verarbeitet und wenigstens ein daraus resultierendes Ergebnis im Rahmen wenigstens einer Analyse vor Ort im oder am Sensor (12) auswertet, wobei die Verarbeitungseinheit (14) von der Maschinensteuerung (16) Daten zur Auswertung des Ergebnisses der Messgrößen (20) bei der Analyse erhält,
- wobei die Analyse wenigstens eine Soll-Ist-Analyse umfasst und die Verarbeitungseinheit (14) bei einer Abweichung eines Istzustandes von einem Sollzustand unabhängig von maschinenspezifischen Parametern wenigstens ein Signal an die Maschinensteuerung (16) und/oder an einen Aktor der Spritzgießmaschine sendet.

2. Verfahren nach Anspruch 1, **dadurch gekennzeichnet, dass** die Schnittstelle (18) taktsynchron mit wenigstens einem Takt eines Bustakts der Maschinensteuerung (16) arbeitet und/oder dass die Verarbeitungseinheit (14) die Analyse in wenigstens einem Takt des Bustakts durchführt.

3. Verfahren nach einem der Ansprüche 1 oder 2, **dadurch gekennzeichnet, dass** auch die Maschinensteuerung (16) wenigstens einen Teil der Analyse durchführt.

4. Verfahren nach einem der vorhergehenden Ansprüche, **dadurch gekennzeichnet, dass** die Messgröße (20) wenigstens eine Kraft und/oder wenigstens eine Beschleunigung umfasst und die mathematische Funktion wenigstens eine zeitliche Ableitung der Messgröße (20) umfasst.

5. Verfahren nach einem der vorhergehenden Ansprüche, **dadurch gekennzeichnet, dass** das resultierende Ergebnis durch Vergleich mit dem Sollverlauf eines Kraft- und/oder Beschleunigungsdifferentials bewertet wird, insbesondere durch die Festlegung eines zulässigen Differentials dF/dt auf einer definierten Wegstrecke Δs.

6. Verfahren nach Anspruch 4, **dadurch gekennzeichnet, dass** die wenigstens eine Kraft eine Kraft zumindest an Teilen einer Schließeinheit, vorzugsweise einer Formschließeinheit (10a) ist.

7. Verfahren nach Anspruch 4, **dadurch gekennzeichnet, dass** die wenigstens eine Beschleunigung eine Beschleunigung zumindest von Teilen einer Schließeinheit, vorzugsweise einer Formschließeinheit (10a) ist.

8. Verfahren nach einem der vorhergehenden Ansprüche, **dadurch gekennzeichnet, dass** die Messgröße (20) wenigstens eine Drehzahl und/oder wenigstens ein Drehmoment umfasst und die mathematische Funktion wenigstens eine Fourier Transformation umfasst.

9. Verfahren nach Anspruch 8, **dadurch gekennzeichnet, dass** die wenigstens eine Drehzahl und/oder das wenigstens eine Drehmoment eine Drehzahl und/oder ein Drehmoment eines Antriebs (36), vorzugsweise eines Rotationsantriebs ist.

10. Verfahren nach einem der vorhergehenden Ansprüche, **dadurch gekennzeichnet, dass** durch die wenigstens eine mathematische Funktion ein Ruck unabhängig vom aktuell gemessenen Betrag der Messgröße und einem dafür ggfs. vorgesehenen Toleranzbereich bestimmt wird.

## Claims

1. A method for signal processing in an injection moulding machine (10) that operates cyclically, for processing plastics and other plasticisable materials, having
- at least one machine controller (16),
- at least one sensor (12) that detects at least one measurement variable (20),
- at least one processing unit (14) that processes the at least one measurement variable (20) on site, in or at the sensor (12), in the processing unit (14), and is connected to the machine controller by means of at least one interface (18) that takes the form of a digital real-time connection,
- wherein the processing unit (14) processes the at least one measurement variable (20) in at least one section of at least one cycle by means of at least one mathematical function, and evaluates at least one resulting output as part of at least one analysis, on site, in or at the sensor (12), wherein the processing unit (14) receives data from the machine controller (16) for the purpose of evaluating the result of the measurement variables (20) during the analysis,
- wherein the analysis comprises at least one target/actual analysis and, in the event that an actual state deviates from a target state, the processing unit (14) transmits at least one signal to the machine controller (16) and/or to an actuator of the injection moulding machine, independently of machine-specific parameters.

2. A method according to Claim 1, **characterised in that** the interface (18) operates in a manner synchronised with at least one clock of a bus clock of the machine controller (16), and/or **in that** the processing unit (14) performs the analysis in at least one clock of the bus clock.

3. A method according to one of Claims 1 or 2, **characterised in that** the machine controller (16) also performs at least a part of the analysis.

4. A method according to one of the preceding claims, **characterised in that** the measurement variable (20) comprises at least one force and/or at least one acceleration, and the mathematical function comprises at least one time derivative of the measurement variable (20).

5. A method according to one of the preceding claims, **characterised in that** the resulting output is assessed by comparison with the target profile of a force and/or acceleration differential, in particular by establishing a permissible differential dF/dt over a defined distance Δs.

6. A method according to Claim 4, **characterised in that** the at least one force is a force at least at parts of a clamping unit, preferably a mould clamping unit (10a).

7. A method according to Claim 4, **characterised in that** the at least one acceleration is an acceleration at least of parts of a clamping unit, preferably a mould clamping unit (10a).

8. A method according to one of the preceding claims, **characterised in that** the measurement variable (20) comprises at least one speed of rotation and/or at least one torque, and the mathematical function comprises at least one Fourier transform.

9. A method according to Claim 8, **characterised in that** the at least one speed of rotation and/or the at least one torque is a speed of rotation and/or a torque of a drive (36), preferably a rotary drive.

10. A method according to one of the preceding claims, **characterised in that** as a result of the at least one mathematical function a jolt is determined independently of the currently measured quantity of the measurement variable and a tolerance range that where appropriate is provided therefor.

## Revendications

1. Procédé de traitement de signal dans une machine de moulage par injection (10) travaillant par cycles, pour la fabrication de matières plastiques et d'autres matériaux plastifiables, comportant
- au moins une commande de machine (16),
- au moins un détecteur (12) qui détecte au moins une grandeur à mesurer (20),
- au moins une unité de traitement (14), laquelle traite la ou les grandeur(s) à mesurer (20) sur place ou au niveau du détecteur (12) dans l'unité de traitement (14) et est reliée par l'intermédiaire d'au moins avec une interface (18) en connexion en temps réel avec la commande de machine,
- dans lequel l'unité de traitement (14) traite au moins une grandeur à mesurer (20) dans au moins une section d'au moins un cycle avec au moins une fonction mathématique et exploite au moins un résultat ainsi obtenu dans le cadre d'au moins une analyse sur place ou dans le détecteur (12), l'unité de traitement (14) obtenant de la commande de machine (16) des données pour l'exploitation des résultats des grandeurs à mesurer (20) par l'analyse,
- dans lequel l'analyse comprend au moins une analyse consigne-mesure et l'unité de traitement (14) envoie, en cas de déviation d'un état réel par rapport à un état nominal, indépendamment de paramètres spécifiques à la machine, au moins un signal à la commande de machine (16) et/ou à un actionneur de la machine de moulage par injection.

2. Procédé selon la revendication 1, **caractérisé en ce que** l'interface (18) travaille en cadence synchronisée avec au moins une cadence d'une horloge de bus de la commande de machine (16) et/ou **en ce que** l'unité de traitement (14) effectue l'analyse à au moins une cadence de l'horloge de bus.

3. Procédé selon la revendication 1 ou 2, **caractérisé en ce que** la commande de machine (19) effectue aussi au moins une partie de l'analyse.

4. Procédé selon l'une des revendications précédentes, **caractérisé en ce que** la grandeur à mesurer (20) comprend au moins une force et/ou au moins une accélération et la fonction mathématique comprend au moins une dérivée dans le temps de la grandeur à mesurer (20).

5. Procédé selon l'une des revendications précédentes, **caractérisé en ce que** le résultat obtenu par comparaison avec l'évolution de la consigne d'un différentiel de force et/ou d'accélération est évalué, en particulier par la fixation d'un différentiel admissible dF/dt sur un tronçon de chemin défini Δs.

6. Procédé selon la revendication 4, **caractérisé en ce que** la ou les force(s) est/sont une force au moins sur des parties d'une unité de fermeture, de préférence d'une unité de fermeture de moule (10a).

7. Procédé selon la revendication 4, **caractérisé en ce que** la ou les accélération(s) est/sont une accélération au moins de parties d'une unité de fermeture, de préférence d'une unité de fermeture de moule (10a).

8. Procédé selon l'une des revendications précédentes, **caractérisé en ce que** la grandeur à mesurer (20) comprend au moins un nombre de tours et/ou au moins un moment de torsion et la fonction mathématique comprend au moins une transformation de Fourier.

9. Procédé selon la revendication 8, **caractérisé en ce que** la ou les nombre(s) de tours et/ou le ou les moment(s) de torsion est/sont un nombre de tours et/ou un moment de torsion d'un entraînement (36), de préférence un entraînement en rotation.

10. Procédé selon l'une des revendications précédentes, **caractérisé en ce qu'**est déterminé, grâce à la ou les fonction(s) mathématique(s), un retour indépendant de la valeur courante mesurée de la grandeur à mesurer et d'un intervalle de tolérance éventuellement prévu pour elle.
